# EUROPÄISCHE PATENTSCHRIFT

(11) **EP 3 543 202 B1**
(45) Veröffentlichungstag und Bekanntmachung des Hinweises auf die Patenterteilung: **01.05.2024**
(21) Anmeldenummer: 19161330.6
(22) Anmeldetag: 07.03.2019
(51) Int. Cl.: B66F 9/24, B66F 17/00, B66F 9/075, B60T 8/172, B60W 40/10

(54) **FLURFÖRDERZEUG MIT EINEM VERFAHREN ZUR BESTIMMUNG EINES ANHALTEWEGES**
AN INDUSTRIAL TRUCK HAVING A METHOD FOR DETERMINING A STOPPING PATH
UN CHARIOT DE MANUTENTION AVEC UN PROCÉDÉ DE DÉTERMINATION D'UN TRAJECTOIRE D'ARRÊT

(30) Priorität: 22.03.2018 DE 102018106892
(43) Veröffentlichungstag der Anmeldung: 25.09.2019
(73) Patentinhaber: Jungheinrich Aktiengesellschaft, 22047 Hamburg (DE)
(72) Erfinder: Wetegrove, Ralf, 22850 Hamburg (DE); Bistry, Hannes, 25421 Pinneberg (DE); Grabbe, Florian, 22335 Hamburg (DE)
(74) Vertreter: Hauck Patentanwaltspartnerschaft mbB

(56) Entgegenhaltungen:
- EP-A2- 0 330 149
- JP-A- H0 196 705
- JP-A- H06 258 335
- JP-A- 2003 259 503
- JP-A- 2004 161 472

## Beschreibung

Die vorliegende Erfindung betrifft ein Verfahren zur Bestimmung eines Anhalteweges bei einem Flurförderzeug. Insbesondere bei Flurförderzeugen, die als teilautomatisierte Kommissionierfahrzeuge ausgebildet sind, ist es von großer Bedeutung, den Anhalteweg des Fahrzeugs genau bestimmen zu können. Durch eine Bestimmung des richtigen Anhalteweges ist es möglich, den nächsten Pick-Platz, also den Platz, an dem Ladung aufgenommen oder entnommen werden soll, genau anzufahren. Der Anhalteweg bei Flurförderzeugen, nicht nur bei teilautomatisierten Kommissionierfahrzeugen, variiert stark und hängt von einer Vielzahl von Umständen und Einflussgrößen ab. Der Beladungszustand, die Fahrgeschwindigkeit, aber auch die Reifenhaftung, wie auch andere Einflüsse, können den Anhalteweg beeinflussen.

Mit DT 15 30 262 ist ein Verfahren zum Ermitteln der beim Bremsen zu berücksichtigenden Masse von Schienenfahrzeugen bekannt geworden. Gerade bei Personenzügen, Güterzügen und anderen mitunter schwer beladenen Zügen ist aufgrund der Begrenzung der Reibwerte zwischen Rad und Schiene ein deutlicher Unterschied in dem Bremsweg vorgesehen. Bekannt geworden ist hierbei, bei einer gleichmäßigen Beschleunigungsbewegung Weg und/oder Geschwindigkeit sowie Zeit zu messen und nach den Gesetzen der gleichförmigen Bewegung hieraus die Masse des Zugs zu bestimmen. Mit Hilfe der so bestimmten Masse kann ein Wert für die Bremskraft bzw. für den Bremseinsatzpunkt errechnet werden. Nachteilig an dem bekannten Verfahren ist, dass im Gegensatz zu einem Güterzug bei einem Flurförderzeug das Verhältnis von Leerlast zu Nutzlast ein anderes ist, so dass aufgrund der hohen Leerlast eine Bestimmung der Nutzlast mit großen Ungenauigkeiten behaftet ist.

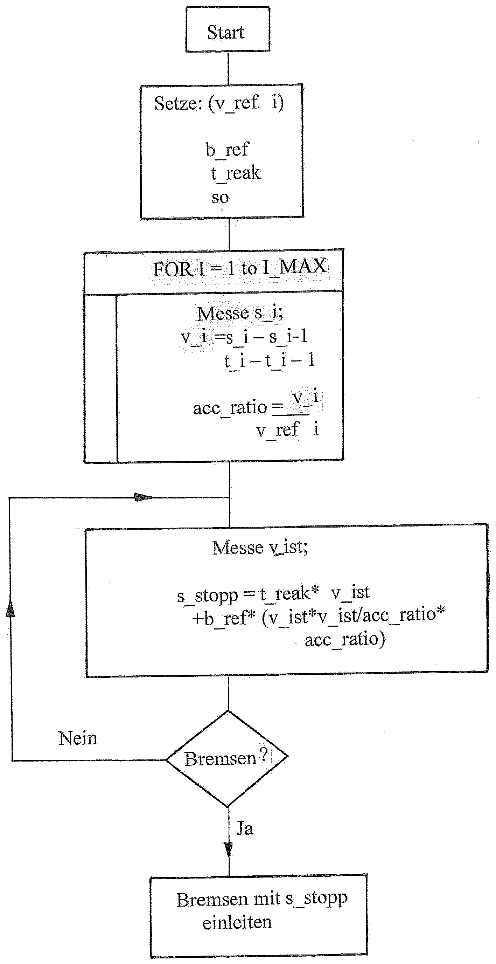

JP H01 96705 A betrifft eine sogenannte Lore, mit der glühender Koks zu einer Wasserkühlstelle gefahren wird. Hierbei ist es wichtig, dass die Lore in einer vorgegebenen Position unter der Sprinkleranlage stoppt. Das hierfür vorgesehene System erschließt sich am besten aus dem Diagramm 1, das die einzelnen Schritte, die zum Auslösen des Bremsvorgangs führen zeigt. Der Bremsbefehl wird in Schritt 40 von Figur 1 ausgelöst. Auslösend hierbei ist die aktuelle Position der Lore, wie sie in Schritt 23 bestimmt wird und die Brems-Startposition, wie sie in Schritt 35 verglichen wird. Es erfolgt also in Schritt 40 ein Einleiten des Bremsvorgangs, wenn die Brems-Startposition 35 der aktuellen Position 23 entspricht. Die Brems-Startposition wiederum ergibt sich aus den Zielpositionen 32 und der Bremsabstandskorrektur 31. Zielposition und korrigierter Bremsabstand gehen in die Bestimmung der Brems-Startposition ein.

JP 2004 161472 A betrifft ein Flurförderzeug und sieht vor, linkes und rechtes Rad unterschiedlich zu Bremsen, um das Flurförderzeug beim Bremsen mit der Vorderradbremse zu stabilisieren, wobei eine variabel betätigte Bremse angenommen und betrachtet wird.

JP 2003 259503 A offenbart ein Flurförderzeug mit einem konstanten Anhalteweg. Bei großer Last wird die Bremskraft zur Einhaltung des vorgegebenen Anhalteweges erhöht. Während des Bremsvorgangs wird abhängig von der erfassten Fahrgeschwindigkeit eine Abweichung von dem verbleibenden Anhalteweg festgestellt. Entsprechend wird in die motorische Steuerung eingegriffen.

Der Erfindung liegt die Aufgabe zugrunde, ein Verfahren zur Bestimmung eines Anhalteweges bei einem Flurförderzeug bereitzustellen, das den aktuellen Anhalteweg möglichst genau bestimmt.

Die der Erfindung zugrundeliegende Aufgabe wird durch ein Verfahren mit den Merkmalen aus Anspruch 1 gelöst. Vorteilhafte Ausgestaltungen bilden den Gegenstand der Unteransprüche.

Das erfindungsgemäße Verfahren dient zur Bestimmung eines Anhalteweges bei einem Flurförderzeug. Hierzu werden eine Reihe von Verfahrensschritten durchgeführt: In einem ersten Verfahrensschritt wird eine von dem Flurförderzeug zurückgelegte Wegstrecke (s(t)) zu vorbestimmten Zeitpunkten (t_i) gemessen. Alternativ ist es auch möglich, zu bestimmten Wegstrecken (s_i) zu messen, dies bedeutet, die zurückgelegte Wegstrecke (s(t)) wird gemessen, wenn eine vorbestimmte Strecke (s_i) zurückgelegt wurde. Die vorbestimmten Zeitpunkte können hierbei beispielsweise einen gleichmäßigen Zeitabstand besitzen, die vorbestimmten Strecken können mit zunehmender Geschwindigkeit größer werden. In einem weiteren Verfahrensschritt wird eine Vergleichsgröße ermittelt. Die Vergleichsgröße ist indikativ für eine relative Geschwindigkeitsänderung des Flurförderzeugs. Die Vergleichsgröße wird abhängig von der gemessenen Wegstrecke ermittelt. Die Vergleichsgröße wird bei einem Start- und/oder Beschleunigungsvorgang des Flurförderzeugs ermittelt, wobei hierzu die relative Geschwindigkeitsänderung des Fahrzeugs ausgewertet wird. Der Anhalteweg wird dann aus der aktuellen Fahrgeschwindigkeit und der ermittelten Vergleichsgröße bestimmt. Die Vergleichsgröße berücksichtigt nicht einfach eine Gesamtmasse des Flurförderzeugs, sondern ist als eine aus der relativen Geschwindigkeitsänderung ermittelte Vergleichsgröße indikativ für das gesamte Beschleunigungsverhalten des Flurförderzeugs. Die Erfindung beruht auf der Einsicht, dass das Beschleunigungsverhalten bei einem Start- und/oder Beschleunigungsvorgang für die Bestimmung des Anhalteweges des Flurförderzeugs ausgewertet werden kann und diesen mit großer Genauigkeit für die aktuelle Fahrumgebung des Fahrzeugs festlegt.

In einer vorteilhaften Weiterbildung des Verfahrens erfolgt die Ermittlung der mindestens einen Vergleichsgröße anhand von mehreren Verfahrensschritten. Zunächst wird eine Durchschnittsgeschwindigkeit für das zwischen den beiden letzten vorbestimmten Zeitpunkten liegende Zeitintervall aus der zurückgelegten Strecke zwischen diesen beiden letzten vorbestimmten Zeitpunkten ermittelt. Für das zwischen den beiden letzten vorbestimmten Zeitpunkten liegende Zeitintervall wird eine Vergleichsgeschwindigkeit bereitgestellt. Die Vergleichsgeschwindigkeit kann aufgrund von empirischen Messreihen gewonnen sein oder aus Simulationen oder Berechnungen stammen. Die für die Geschwindigkeitsänderung indikative Vergleichsgröße wird abhängig von einem Quotienten der ermittelten Durchschnittsgeschwindigkeit und der Vergleichsgeschwindigkeit bestimmt. Der Ermittlung der mindestens einen Vergleichsgröße liegt der Gedanke zugrunde, dass, bezogen auf eine Vergleichsgeschwindigkeit, die als eine Art Referenz eines definierten Flurförderzeugs in einer definierten Umgebung angesehen werden kann, die tatsächlich erzielte Durchschnittsgeschwindigkeit für das entsprechende Zeitintervall ein Indikator dafür ist, ob das Fahrzeug schneller oder langsamer Geschwindigkeit aufnimmt. Der Quotient beider Größen ist dimensionslos und liefert unter Referenzbedingungen den Wert 1. Nimmt das Fahrzeug langsamer bei dem Start- und/oder Beschleunigungsvorgang Fahrt auf, so ist seine Durchschnittsgeschwindigkeit kleiner als die Vergleichsgeschwindigkeit und die Vergleichsgröße besitzt einen Wert kleiner 1. Ist das Fahrzeug beispielsweise leichter oder besitzt eine bessere Reifenhaftung, so ist die Durchschnittsgeschwindigkeit in dem betrachteten Zeitintervall der beiden letzten vorbestimmten Zeitpunkte größer als die Vergleichsgeschwindigkeit und der Quotient nimmt einen Wert größer 1 an. Auch für Streckenabschnitte kann der Vergleich der Durchschnittsgeschwindigkeiten erfolgen.

Bei dem erfindungsgemäßen Verfahren hat es sich als vorteilhaft herausgestellt, dass während eines Start- und/oder Beschleunigungsvorgangs nicht nur eine Vergleichsgröße bestimmt wird, sondern die Vergleichsgröße wiederholt für unterschiedliche Zeitintervalle zwischen zwei Zeitpunkten oder für Streckenabschnitte ermittelt wird. Da die zurückgelegte Wegstrecke quadratisch mit der Zeit zunimmt, ist deren Steigung und die zugehörige Beschleunigung genauer bestimmbar, wenn dies für mehrere Zeitintervalle erfolgt.

In einer bevorzugten Weiterbildung des Verfahrens ist es hilfreich, für den Anhalteweg eine Reaktionszeit zu berücksichtigen, wobei zur Bestimmung des Anhalteweges eine Wegstrecke hinzugezählt wird, die sich aus der Reaktionszeit und einer aktuellen Istgeschwindigkeit des Fahrzeugs ergibt. Diese Strecke kann beispielsweise als Produkt der Reaktionszeit und der aktuellen Istgeschwindigkeit angesetzt werden. Die Reaktionszeit ist hierbei eine beispielsweise empirisch bestimmte Größe, die auch die besondere Einsatzsituation des Flurförderzeugs und eine verzögerte Reaktion durch eine komplexe Umgebungssituation berücksichtigt.

Weiterhin hat sich als vorteilhaft herausgestellt, einen Referenzanhalteweg bereitzustellen und zur Bestimmung des aktuellen Anhalteweges den Referenzanhalteweg mit der Istgeschwindigkeit und der Vergleichsgröße zu gewichten. Besonders vorteilhaft an diesem Schritt ist, dass die Istgeschwindigkeit des Fahrzeugs direkt in die Bestimmung des Anhalteweges eingeht, während andere Größen über die Vergleichsgröße nicht direkt, sondern indirekt miteinander eingehen. Bevorzugt wird ein Quotient aus Istgeschwindigkeit und Referenzgröße des Fahrzeugs gewählt, der mit dem Referenzanhalteweg multipliziert wird. Als vorteilhaft hat sich herausgestellt, auch eine Potenz aus dem Quotienten von Istgeschwindigkeit und Referenzgröße mit dem Referenzanhalteweg zu multiplizieren. Bevorzugt wird hier als Potenz das Quadrat oder eine Potenz in der Größenordnung von 2 gewählt.

Das erfindungsgemäße Verfahren wird an dem beiliegenden Ablaufdiagramm näher beschrieben.

Grundansatz des erfindungsgemäßen Verfahrens ist es, eine Reihe von Referenzgrößen und Konstanten bereitzustellen. Die Referenzgrößen können beispielsweise aus Messungen für den Fahrzeugtyp an einem Leerfahrzeug gebildet werden. Die Referenzgrößen können auch für unterschiedliche Bodenbeläge, Bereifungen, Radgrößen und andere Mittel eingesetzt werden. Zu diesen Konstanten und vorgegebenen Größen gehört ein Referenzanhalteweg (b_ref), der einen durchschnittlichen Anhalteweg eines nicht beladenen Fahrzeugs in einer Referenzumgebung definiert. Der Anhalteweg wird in einer Längeneinheit, beispielsweise Zentimeter oder Meter erfasst und abgespeichert. Ferner wird eine Reaktionszeit (t_reak) für das Fahrzeug in Sekunden bestimmt. Die Reaktionszeit ist nicht die rein physiologische Reaktionszeit, wie sie beispielsweise für einen Kraftfahrzeugfahrer sich ergibt, sondern kann durchaus von dieser abweichen. Durch die Arbeitssituation in einem Flurförderzeug mit der Vielzahl an Umgebungseindrücken und gewissen psychologischen Stressaspekten, können die für den Anhalteweg eines Flurförderzeugs erforderlichen Reaktionszeiten durchaus abweichen. Ferner wird ein Satz von Referenzgeschwindigkeiten vorgegeben. Die Referenzgeschwindigkeiten beziehen sich jeweils auf ein Zeitintervall i, das zwischen den Zeitpunkten t_i-1 und t_i liegt. Beispielsweise können hier eine Reihe von verschiedenen Zeitintervallen vorgegeben sein. Alternativ ist es auch möglich, die Referenzgeschwindigkeit für die Intervalle, abhängig von der Strecke, vorzugegeben. Hierfür wird auf das zwischen den beiden letzten vorbestimmten Wegstrecken liegende Wegeintervall zurückgegriffen. Dabei wird beispielsweise eine Referenzgeschwindigkeit für die Strecke 10 cm bis 30 cm, 30 cm bis 50 cm, 50 cm bis 70 cm und 70 cm bis 100 cm vorgegeben.

Während der Fahrt des Flurförderzeugs läuft fortlaufend eine Messeinrichtung, die eine zurückgelegte Wegstrecke misst. Die Messung der zurückgelegten Wegstrecke kann beispielsweise über einen Inkrementalgeber am Rad erfolgen, auch andere Streckenmessungen sind hier möglich.

Bei dem erfindungsgemäßen Verfahren wird fortlaufend zu den Zeitpunkten t_i eine Strecke s_i gemessen. Für die gemessene Strecke s_i wird, bezogen auf die zuletzt gemessene Strecke s_i -1, die Durchschnittsgeschwindigkeit für das Zeitintervall t_i -1 bis t_i berechnet. Die Durchschnittsgeschwindigkeit berechnet sich als Quotient aus zurückgelegter Strecke durch das Zeitintervall. Aus der gemessenen Durchschnittsgeschwindigkeit wird unter Hinzunahme der Referenzgeschwindigkeit die Vergleichsgröße acc_ratio ermittelt. Die Vergleichsgröße erlaubt es, eine Aussage darüber zu machen, um wieviel schneller oder langsamer die Durchschnittsgeschwindigkeit im i-ten Zeitintervall ist, verglichen mit einer Referenzgeschwindigkeit für das i-te Zeitintervall. Der Vergleich der Zeitintervalle macht deutlich, dass stets nur von gleichen Ausgangsbedingungen ausgehend ein Vergleich erfolgen kann.

Die so bestimmte Vergleichsgröße acc_ratio gibt als Faktor an, ob die Durchschnittsgeschwindigkeit im i-ten Intervall größer, gleich oder kleiner als die Referenzgeschwindigkeit für das i-te Intervall ist.

Die vorstehend beschriebene Intervallbetrachtung wird entsprechend den vorgegebenen Intervallen bzw. den vorgegebenen Referenzgeschwindigkeiten für die Intervalle wiederholt. Hierbei ist es möglich, dass, wie in dem Flussdiagramm dargestellt, die Vergleichsgröße (acc_ratio) für jedes Intervall neu berechnet wird. Alternativ ist es auch möglich, die Vergleichsgröße durchgängig fortzuschreiben und beispielsweise von den in den vorausgehenden Intervallen bestimmten Vergleichswerten abzuhängen. Hier kann beispielsweise ein gewichteter Mittelwert herangezogen werden.

Mit Abschluss des Start- und/oder Beschleunigungsvorgangs ist eine für das weitere Verfahren geeignete und aussagekräftige Vergleichsgröße acc_ratio bestimmt. Die Vergleichsgröße wird bei jedem Start- und/oder Beschleunigungsvorgang erneut überprüft, da sich zwischen den einzelnen Startvorgängen die Last auf das Fahrzeug zwischen den Vorgängen durch Be- und Entladevorgänge geändert haben kann. Auch andere, das Fahrverhalten beeinflussende Faktoren können sich zwischen zwei Startvorgängen geändert haben, beispielsweise die Temperatur der Reifen und damit die Reifenhaftung, die Beschaffenheit des Untergrundes und weitere den Anhalteweg beeinflussende Größen.

In dem eigentlichen Vorgang zur Bestimmung des Anhalteweges erfolgt eine Messung der aktuellen Istgeschwindigkeit v_ist. Die Istgeschwindigkeit kann beispielsweise ohne weiteres durch die Messung der zurückgelegten Wegstrecke bestimmt werden. Hierzu wird zu zwei Zeitpunkten mit einem vorbestimmten Zeitintervall dazwischen den zurückgelegten Wegstrecken gemessen und hieraus die aktuelle Geschwindigkeit bestimmt. Der sich hieraus ergebende Anhalteweg s_stopp setzt sich additiv aus zwei Termen zusammen. Der erste Term betrifft die zurückgelegte Strecke, bis eine Reaktion des Fahrzeugs erfolgt. Bei einem halbautomatisch oder vollautomatisch fahrenden Fahrzeug ist die Reaktionszeit im Wesentlichen durch die Verarbeitungszeiten für die Erkennung der Anhalteposition oder des Anhaltebefehls und das entsprechende Ansteuern des Halteplatzes erforderlich. Bei manuell betätigten Fahrzeugen betrifft die Reaktionszeit auch die Zeitspanne, die erforderlich ist, bis der Fahrer reagiert. Der zweite Term für den Anhalteweg ergibt sich durch den Referenzanhalteweg b_ref. Der Referenzanhalteweg ist ein Anhalteweg, der auch zu den Vergleichsgeschwindigkeiten v_ref korrespondiert. Werden die Vergleichsgeschwindigkeiten bei dem Start- und/oder Beschleunigungsvorgang eingehalten, so ist die Vergleichsgröße stets 1 und der Referenzanhalteweg b_ref hängt nur noch von der aktuellen Fahrzeuggeschwindigkeit ab. Der Referenzanhalteweg b_ref entspricht einer reziproken Beschleunigung, also s²/m⁻¹.

Der insgesamt vorliegende Anhalteweg s_stopp setzt sich aus den beiden Termen für die Reaktionszeit und den Referenzanhalteweg zusammen. Der Referenzanhalteweg wird multipliziert mit dem Quadrat der Istgeschwindigkeit, dividiert durch das Quadrat der Vergleichsgröße. Die quadratische Abhängigkeit von der Istgeschwindigkeit entspricht dabei dem Umstand, dass bei einer konstanten Bremskraft oder Beschleunigungskraft die Strecke quadratisch von der verstrichenen Zeit abhängt.

Die Abfrage, ob gebremst werden soll oder nicht (Bremsen?), kann aus unterschiedlichen Gründen eingeleitet werden. Ein möglicher Grund, um den Bremsvorgang einzuleiten, kann vorliegen, wenn eine Ziel-Wegstrecke s_ziel vorgegeben ist. Dann wird der Bremsvorgang eingeleitet, wenn die zurückgelegte Strecke s_i und der Anhalteweg s_stopp gleich oder größer als die vorbestimmte Ziel-Wegstrecke s_ziel ist.

## Patentansprüche

1. Verfahren zur Bestimmung eines Anhalteweges (s_stopp) bei einem Flurförderzeug mit folgenden Verfahrensschritten:
a. Messen einer von dem Flurförderzeug zurückgelegten Wegstrecke (s(t)) zu vorbestimmten Zeitpunkten (t_i) oder zu vorbestimmten Wegstrecken (s_i),
b. Ermitteln mindestens einer für eine relative Geschwindigkeitsänderung indikativen Vergleichsgröße (acc_ratio) abhängig von mindestens einer zurückgelegten Wegstrecke (s_i) bei einem Start- und/oder Beschleunigungsvorgang,
c. Bestimmen des Anhalteweges (s_stopp) aus der aktuellen Fahrgeschwindigkeit (v_ist) und der ermittelten Vergleichsgröße (acc_ratio).

2. Verfahren nach Anspruch 1 **dadurch gekennzeichnet, dass** der Verfahrensschritt zur Ermittlung der mindestens einen Vergleichsgröße die folgenden Schritte umfasst:
a. Bestimmen einer Durchschnittsgeschwindigkeit (v_i) für das zwischen den beiden letzten vorbestimmten Zeitpunkten (t_(i-1), t_i) liegende Zeitintervall aus der zurückgelegten Strecke (s_i - s_(i-1)),
b. Bereitstellen einer Vergleichsgeschwindigkeit (v_ref_i) für das zwischen den beiden letzten vorbestimmten Zeitpunkten (t_(i-1), t_i) liegende Zeitintervall oder zwischen den beiden letzten vorbestimmten Wegstrecken (s_(i-1), S_i) liegende Wegintervall,
c. Bestimmen der Vergleichsgröße (acc_ratio) abhängig von einem Quotienten der Durchschnittsgeschwindigkeit und der Vergleichsgeschwindigkeit.

3. Verfahren nach Anspruch 1 oder 2, **dadurch gekennzeichnet, dass** während des Start- und/oder Beschleunigungsvorgangs die Vergleichsgröße (acc_ratio) wiederholt für unterschiedliche Zeitintervalle zwischen zwei Zeitpunkten (t_(i-1), t_i) ermittelt wird.

4. Verfahren nach einem der Ansprüche 1 bis 3, **dadurch gekennzeichnet, dass** eine Reaktionszeit (t_reak) bereitgestellt wird und zur Bestimmung des Anhalteweges (s_stopp) eine Wegstrecke hinzugezählt wird, die sich aus der Reaktionszeit (t_reak) und einer aktuellen Ist-Geschwindigkeit (v_ist) ergibt.

5. Verfahren nach einem der Ansprüche 1 bis 4, **dadurch gekennzeichnet, dass** ein Referenzanhalteweg (b_ref) bereitgestellt und dieser mit der Istgeschwindigkeit (v_ist) und der Vergleichsgröße gewichtet wird, um den Anhalteweg (s_stopp) zu bestimmen.

6. Verfahren nach Anspruch 5, **dadurch gekennzeichnet, dass** der Referenzanhalteweg (b_ref) mit dem Quotienten aus Istgeschwindigkeit (v_ist) und der Referenzgröße (acc_ratio) oder einer Potenz von diesem Quotienten gewichtet wird.

## Claims

1. A method for determining a stopping path (s_stopp) for an industrial truck, comprising the following method steps:
a. measuring a distance (s(t)) covered by the industrial truck at predetermined points in time (t_i) or at predetermined distances (s_i),
b. ascertaining at least one comparison variable (acc_ratio) indicative of a relative speed change as a function of at least one covered distance (s_i) during a start-up and/or acceleration process,
c. determining the stopping path (s_stopp) from the current travel speed (v_ist) and the ascertained comparison variable (acc_ratio).

2. The method according to claim 1, **characterized in that** the method step for ascertaining the at least one comparison variable comprises the following steps:
a. determining an average speed (v_i) for the time interval between the two last predetermined points in time (t_(i-1), t_i) from the covered distance (s_i - s_(i-1)),
b. providing a comparison speed (v_ref_i) for the time interval between the two last predetermined points in time (t_(i-l), t_i) or the travel interval between the two last predetermined distances (s_(i-l), S_i),
c. determining the comparison variable (acc_ratio) as a function of a quotient of the average speed and the comparison speed.

3. The method according to claim 1 or 2, **characterized in that**, during the start-up and/or acceleration process, the comparison variable (acc_ratio) is ascertained repeatedly for different time intervals between two points in time (t_(i-l), t_i).

4. The method according to one of claims 1 to 3, **characterized in that** a reaction time (t_reak) is provided and a distance that results from the reaction time (t_reak) and a current actual speed (v_ist) is added for the determination of the stopping path (s_stopp).

5. The method according to one of claims 1 to 4, **characterized in that** a reference stopping path (b_ref) is provided and same is weighted with the actual speed (v_ist) and the comparison variable in order to determine the stopping path (s_stopp).

6. The method according to claim 5, **characterized in that** the reference stopping path (b_ref) is weighted with the quotient of the actual speed (v_ist) and the reference variable (acc_ratio) or a power of this quotient.

## Revendications

1. Procédé de détermination d'une distance d'arrêt (s_stopp) d'un chariot de manutention comprenant les étapes de procédé suivantes :
a. mesure d'un itinéraire (s(t)) parcouru par le chariot de manutention à des moments (t_i) prédéterminés ou à des itinéraires (s_i) prédéterminés,
b. détection d'au moins une grandeur de comparaison (acc_ratio) indiquant un changement de vitesse relatif en fonction d'au moins un itinéraire (s_i) parcouru lors d'un processus de démarrage et/ou d'accélération,
c. détermination de la distance d'arrêt (s_stopp) à partir de la vitesse de déplacement actuelle (v_ist) et de la grandeur de comparaison (acc_ratio) détectée.

2. Procédé selon la revendication 1, **caractérisé en ce que** l'étape de procédé visant à détecter l'au moins une grandeur de comparaison comporte les étapes suivantes :
a. détermination d'une vitesse moyenne (v_i) pour l'intervalle de temps compris entre les deux derniers moments prédéterminés (t_(i-1), t_i) à partir de l'itinéraire parcouru (s_i - s_(i-1)),
b. mise à disposition d'une vitesse de comparaison (v_ref_i) pour l'intervalle de temps compris entre les deux derniers moments prédéterminés (t_(i-1), t_i) ou l'intervalle de distance compris entre les deux derniers itinéraires prédéterminés (s_(i-1), S_i),
c. détermination de la grandeur de comparaison (acc_ratio) en fonction d'un quotient de la vitesse moyenne et de la vitesse de comparaison.

3. Procédé selon la revendication 1 ou 2, **caractérisé en ce que** pendant le processus de démarrage et/ou d'accélération, la grandeur de comparaison (acc_ratio) est détectée plusieurs fois pour différents intervalles de temps entre deux moments (t_(i-1), t_i).

4. Procédé selon l'une des revendications 1 à 3, **caractérisé en ce qu'**un temps de réaction (t_reak) est mis à disposition et un itinéraire résultant du temps de réaction (t_reak) et d'une vitesse réelle actuelle (v_ist) est inclus dans la détermination de la distance d'arrêt (s_stopp).

5. Procédé selon l'une des revendications 1 à 4, **caractérisé en ce qu'**une distance d'arrêt de référence (b_ref) est mise à disposition et celle-ci est pondérée par la vitesse réelle (v_ist) et la grandeur de comparaison, afin de déterminer la distance d'arrêt (s_stopp).

6. Procédé selon la revendication 5, **caractérisé en ce que** la distance d'arrêt de référence (b_ref) est pondérée par le quotient de la vitesse réelle (v_ist) et de la grandeur de référence (acc_ratio) ou une puissance de ce quotient.
